# EUROPEAN PATENT APPLICATION

(11) **EP 4 800 499 A1**
(43) Date of publication of application: **02.09.2026**
(21) Application number: 24882250.4
(22) Date of filing: 15.10.2024
(51) Int. Cl.: G05B 23/02, G06N 20/00

(54) **INFORMATION PROCESSING DEVICE, INFORMATION PROCESSING METHOD, AND PROGRAM**

(30) Priority: 27.10.2023 JP 2023184702
(71) Applicant: Resonac Corporation, Tokyo 105-7325 (JP)
(72) Inventor: KURAUCHI, Yuji, Tokyo 105-7325 (JP)
(74) Representative: Strehl & Partner mbB
(86) International application number: PCT/JP2024/036715
(87) International publication number: WO 2025/089137

(57) **Abstract**

An information processing device includes: an obtainer configured to obtain observation data including an explanatory variable and a target variable at a predetermined time point; a summarizer configured to generate summary data indicating a predetermined number or less of pieces of the observation data for each piece of summary information of the observation data; and a trainer configured to generate a trained model based on training data including the observation data obtained during a targeted learning period and the summary data.

## Description

### TECHNICAL FIELD

The present disclosure relates to an information processing device, information processing method, and program.

### BACKGROUND ART

A technique for performing prediction by using a trained model is known. In order to prevent deterioration of the trained model over time, a technique for periodically updating the trained model by using the most recent data has been proposed.

For example, Patent Document 1 discloses a predictive-model retraining device for retraining a predictive model by using retraining data to be used for retraining the predictive model when performance degradation of the predictive model due to a change in data characteristics with time is detected.

### RELATED ART DOCUMENTS

### PATENT DOCUMENTS

Patent Document 1: Japanese Patent No. 7176656

### SUMMARY OF THE INVENTION

### PROBLEMS TO BE SOLVED BY THE INVENTION

However, in the existing technique, there is an issue that the prediction accuracy decreases when the numerical variance of a prediction target changes with time. For example, a trained model trained when the prediction target is in a stable state may become a constant expression or a parameter may diverge. In this case, a large prediction error may occur when the prediction target shifts to a fluctuating state.

An object of the present disclosure is to enhance the prediction accuracy of a trained model in view of the above-described technical issue.

### MEANS FOR SOLVING THE PROBLEMS

The present disclosure is provided with the following configurations.
[1] An information processing device includes:
   an obtainer configured to obtain observation data including an explanatory variable and a target variable at a predetermined time point;
   a summarizer configured to generate summary data indicating a predetermined number or less of pieces of the observation data for each piece of summary information of the observation data; and
   a trainer configured to generate a trained model based on training data including the observation data obtained during a targeted learning period and the summary data.
[2] The information processing device according to [1], further including:
   a predictor configured to predict the target variable by inputting the explanatory variable obtained during a targeted prediction period to the trained model.
[3] The information processing device according to [2], wherein
   the targeted prediction period is a time period including a current time, and
   the targeted learning period is a time period immediately before the targeted prediction period.
[4] The information processing device according to [3], wherein
   the summarizer is further configured to generate the summary data including the observation data obtained before the targeted learning period.
[5] The information processing device according to [4], wherein
   the summarizer is further configured to generate the summary data indicating a predetermined number or less of pieces of the observation data that have been newly obtained for each piece of the summary information.
[6] The information processing device according to any one of [1] to [5] above, wherein
   the summarizer is further configured to generate the summary information by executing rounding processing on the observation data.
[7] The information processing device according to any one of [1] to [6] above, wherein
   a numerical variance of the explanatory variable or the target variable included in the observation data changes with time.
[8] The information processing device according to any one of [1] to [7] above, wherein
   the explanatory variable includes a water level of a dam, and
   the target variable includes an amount of power generated by a hydroelectric power plant that uses the dam.
[9] The information processing device according to any one of [1] to [7] above, wherein
   the explanatory variable includes a parameter indicating an operation condition of a plant, and
   the target variable includes a parameter indicating a state of the plant.
[10] An information processing method for causing a computer to execute:
   obtaining observation data including an explanatory variable and a target variable at a predetermined time,
   generating summary data indicating a predetermined number or less of pieces of the observation data for each piece of summary information of the observation data, and
   generating a trained model based on training data including the observation data obtained during a targeted learning period and the summary data.
[11] A non-transitory computer-readable recording medium having a program embodied therein for causing a computer to execute:
   obtaining observation data including an explanatory variable and a target variable at a predetermined time point;
   generating summary data indicating a predetermined number or less of pieces of the observation data for each piece of summary information of the observation data;
   generating a trained model based on training data including the observation data obtained during a targeted learning period and the summary data.

### ADVANTAGEOUS EFFECTS OF THE INVENTION

According to one aspect of the present disclosure, the prediction accuracy of the trained model can be enhanced.

### BRIEF DESCRIPTION OF THE DRAWINGS

[FIG. 1] FIG. 1 illustrates graphs showing examples of observation data.
[FIG. 2] FIG. 2 is a graph showing an example of a relationship between the observation data and a predictive model.
[FIG. 3] FIG. 3 is a block diagram showing an example of an overall configuration of a prediction system.
[FIG. 4] FIG. 4 is a block diagram showing an example of a hardware configuration of a computer.
[FIG. 5] FIG. 5 is a block diagram showing an example of a functional configuration of an information processing device.
[FIG. 6] FIG. 6 is a table showing an example of the observation data.
[FIG. 7] FIG. 7 is a table showing an example of how summary data is updated.
[FIG. 8] FIG. 8 is a flowchart illustrating an example of training processing.
[FIG. 9] FIG. 9 is a diagram illustrating an example of the training processing.
[FIG. 10] FIG. 10 is a diagram illustrating another example of the training processing.
[FIG. 11] FIG. 11 is a flowchart illustrating an example of prediction processing.
[FIG. 12] FIG. 12 illustrates graphs showing examples of prediction accuracy.

### DETAILED DESCRIPTION OF THE INVENTION

Hereinafter, each embodiment of the present disclosure will be described with reference to the accompanying drawings. In the present specification and the accompanying drawings, components having substantially the same functional configuration are denoted by the same reference signs and redundant descriptions thereof will be omitted.

### [Embodiment]

One embodiment of the present disclosure is a prediction system configured to predict a predetermined target variable based on a trained predictive model. The prediction system in the present embodiment has a function of preventing deterioration of the predictive model with time by periodically updating the predictive model by using the training data updated by appropriately selecting pieces of the data to be updated in the training data.

In the present embodiment, the prediction system uses time-series observation data obtained by performing observation at a predetermined time point. It is assumed that a numerical variance of the observation data changes with time. Specifically, the observation data includes data of a period when the numerical variance is small (hereinafter also referred to as "stable period") and data of a period when the numerical variance is large (hereinafter also referred to as "fluctuating period"). In the observation data, the timing of transition from the stable period to the fluctuating period or from the fluctuating period to the stable period may be periodic or irregular.

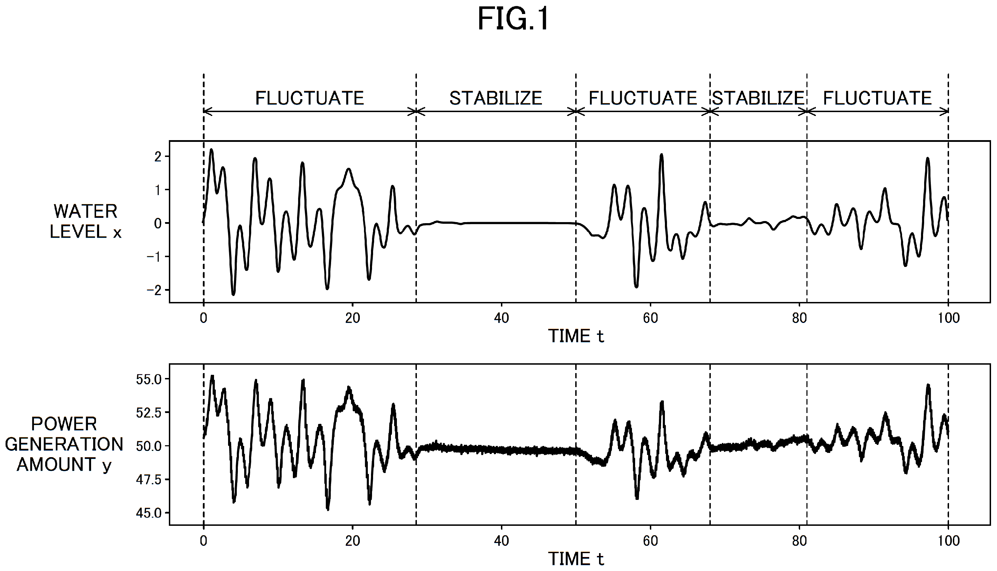

FIG. 1 illustrates graphs showing examples of the observation data. FIG. 1 shows a transition of water level of a dam and a transition of an amount of power generated by a hydroelectric power plant using the dam as the examples of observation data with a time-varying numerical variance.

As shown in FIG. 1, water level x and power generation amount y are two types of data in which the fluctuating period with a large numerical variance and the stable period with a small numerical variance occur alternately. The relationship between the water level x and the power generation amount y can be modeled as a formula y = ax + b with the water level x as the explanatory variable and the power generation amount y as the target variable. Parameters a and b of the modeled formula fluctuate due to exogenous factors. The exogenous factors include, for example, flow velocity fluctuations due to weather or dust accumulation in waterways.

Incidentally, in the example as shown in FIG. 1, there is no periodicity in the time variation of numerical variance because the lengths of the fluctuating period and the stable period are different, but there may be periodicity in the time variation of numerical variance over a long span. For example, there may be no periodicity in the time variation of numerical variance when viewed on a monthly basis, but there may be periodicity when viewed on a yearly basis.

When prediction is performed by using the trained model, prediction can be performed with high accuracy when the numerical variance of the training data is larger than that of the observation data. Conversely, prediction accuracy decreases when the numerical variance of the training data is smaller than that of the observation data. When the predictive model is periodically updated by using the most recent observation data, when the period of the observation data shifts from the stable period to the fluctuating period, the predictive model is trained by using the observation data obtained during the stable period and prediction is made by using the observation data obtained during the fluctuating period, such that prediction error increases.

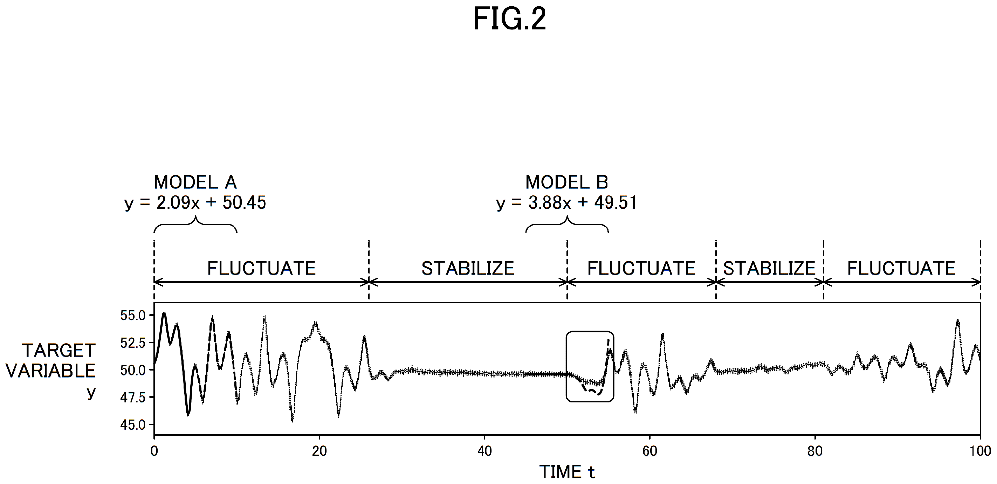

FIG. 2 is a graph showing an example of a relationship between the observation data and the predictive model. In FIG. 2, a dotted line represents transitions of the observed target variable. A solid line represents the observation data used as the training data, and a dashed line represents predicted values of the target variable.

As shown in FIG. 2, when the numerical variance of the observation data changes with time, the parameters of the predictive model fluctuate depending on the period used with respect to the training data. In the example as shown in FIG. 2, the parameters "a" and "b" in the formula with respect to a model A trained by using the observation data obtained during the fluctuating period are a = 2.09 and b = 50.45, while the parameters "a" and "b" with respect to a model B trained by using the observation data obtained during the stable period are a = 3.88 and b = 49.51, indicating that the value of the parameter "a" varies greatly. FIG. 2 indicates that a large prediction error occurs when the model B that is trained by using the observation data obtained during the stable period is used for a prediction performed by using the observation data obtained during the fluctuating period.

The present embodiment aims to enhance the prediction accuracy of the trained model. In particular, in the present embodiment, the trained model is updated such that the prediction accuracy does not decrease even when the observation data includes numerical variance that varies with time. In one aspect, according to the present embodiment, the target variable can be predicted with high accuracy by using observation data whose numerical variance varies with time.

### <Overall configuration>

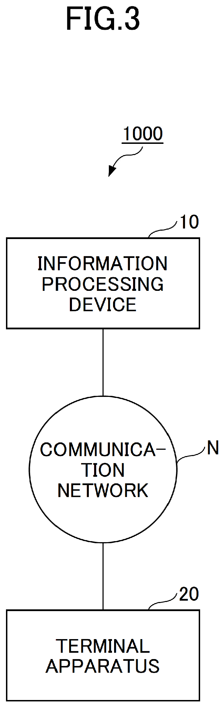

The overall configuration of the prediction system in the present embodiment will be described with reference to FIG. 3. FIG. 3 is a block diagram showing an example of the overall configuration of the prediction system.

As shown in FIG. 3, a prediction system 1000 includes an information processing device 10 and a terminal apparatus 20. The information processing device 10 and the terminal apparatus 20 are connected to each other via a communication network N such as a local area network (LAN) or the Internet to enable data communication.

The information processing device 10 is an information processor such as a personal computer, a workstation, or a server for predicting a predetermined target variable. The information processing device 10 obtains observation data including an explanatory variable and a target variable at a predetermined time point, and generates a trained predictive model based on the observation data obtained from observation performed during a predetermined targeted learning period. The information processing device 10 predicts the target variable by inputting the explanatory variable observed during the predetermined targeted prediction period into the trained predictive model, and transmits a predicted result to the terminal apparatus 20.

The targeted prediction period may be a time period including the current time. The targeted learning period may be a time period immediately before the targeted prediction period. The time period is a range of time obtained by dividing a time axis at any time points. The time period may be, for example, an update interval of the predictive model. The update interval of the predictive model may be arbitrarily set according to the characteristics of the prediction target. The update interval of the predictive model may or may not be constant, and may or may not be the same as the aforementioned time period. Hereinafter, the time period is a predetermined time period, and the observation data is obtained at a predetermined time interval.

The terminal apparatus 20 is an information processing terminal such as a personal computer, a smartphone, or a tablet terminal operated by a user of the prediction system 1000. The terminal apparatus 20 presents a predicted result received from the information processing device 10 to the user. The predicted result includes predicted values of the target variable for the predetermined targeted prediction period. The terminal apparatus 20 may request a predicted result from the information processing device 10 in response to an operation by the user.

It should be noted that the overall configuration of the prediction system 1000 as shown in FIG. 3 is an example, and there may be various system configuration examples in accordance with applications and purposes. For example, a plurality of information processing devices 10 and one or multiple terminal apparatuses 20 may be included in the prediction system 1000. For example, the information processing devices 10 may be achieved by a plurality of computers or may be achieved as a cloud computing service. The classification of apparatuses such as the information processing device 10 and the terminal apparatus 20 as shown in FIG. 3 is an example.

### <Hardware configuration>

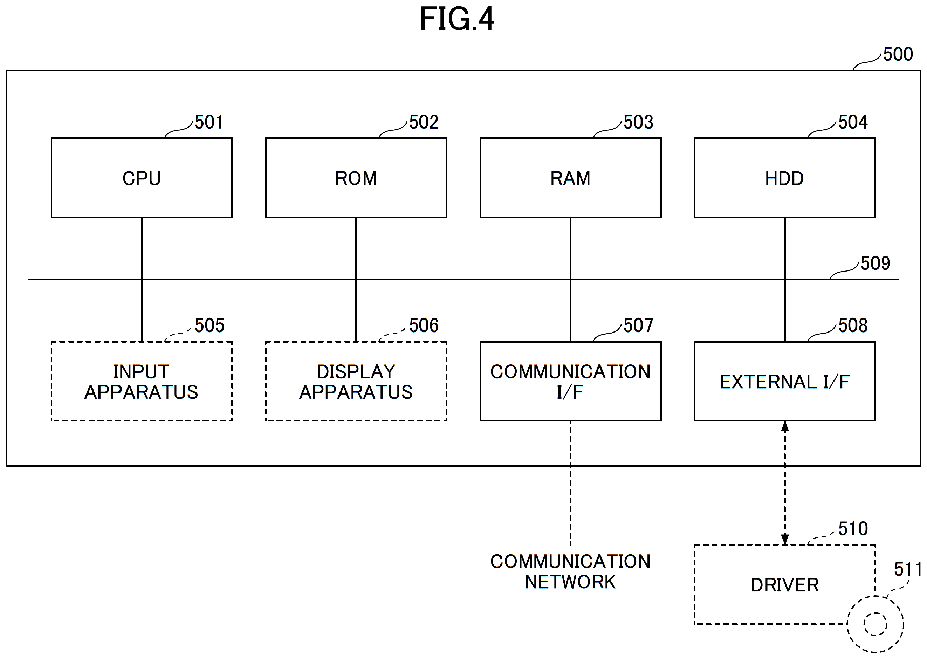

A hardware configuration of the prediction system 1000 in the present embodiment will be described with reference to FIG. 4.

### <<Computer>>

The information processing device 10 and the terminal apparatus 20 in the present embodiment are implemented by, for example, a computer. FIG. 4 is a block diagram showing an example of a hardware configuration of the computer 500 in the present embodiment.

As shown in FIG. 4, a computer 500 includes a central processing unit (CPU) 501, a read only memory (ROM) 502, a random access memory (RAM) 503, a hard disk drive (HDD) 504, an input apparatus 505, a display apparatus 506, a communication interface (I/F) 507, and an external I/F 508. The CPU 501, the ROM 502, and the RAM 503 form what is referred to as a computer. Hardware components of the computer 500 are connected to each other via a bus line 509. The input apparatus 505 and the display apparatus 506 may be connected to the external I/F 508 for use.

The CPU 501 is an arithmetic unit that reads programs and data from a storage apparatus such as the ROM 502 or the HDD 504 into the RAM 503 and executes processing, thereby achieving control and functions of the entire computer 500.

The ROM 502 is an example of a nonvolatile semiconductor memory (storage apparatus) that can hold programs and data even when the power is turned off. The ROM 502 functions as a main storage apparatus for storing various programs and data necessary for the CPU 501 to execute various programs installed in the HDD 504. Specifically, the ROM 502 stores boot programs such as a basic input/output system (BIOS) and an extensible firmware interface (EFI) to be executed when the computer 500 is started, and data such as operating system (OS) settings and network settings.

The RAM 503 is an example of a volatile semiconductor memory (storage apparatus) whose programs and data are erased when the power is turned off. The RAM 503 is, for example, a dynamic random access memory (DRAM) or a static random access memory (SRAM). The RAM 503 provides a work area to be expanded when various programs installed in the HDD 504 are executed by the CPU 501.

The HDD 504 is an example of the nonvolatile storage apparatus for storing programs and data. The programs and data stored in the HDD 504 include an OS, which is basic software for controlling the entire computer 500, and applications for providing various functions on the OS. Instead of the HDD 504, the computer 500 may use a storage apparatus (for example, a solid state drive: SSD) that uses a flash memory as a storage medium.

The input apparatus 505 includes a touch panel used by a user to input various signals, operation keys and buttons, a keyboard, a mouse, a microphone for inputting sound data such as voice, and the like.

The display apparatus 506 includes a liquid crystal display or an organic electro-luminescence (EL) display for displaying a screen, a speaker for outputting sound data such as voice, and the like.

The communication I/F 507 is an interface for connecting to a communication network and allowing the computer 500 to perform data communication.

The external I/F 508 is an interface with an external device. The external device includes a driver 510 and the like.

The driver 510 is a device for setting a recording medium 511. Here, the recording medium 511 includes a medium for optically, electrically, or magnetically recording information such as a CD-ROM, a flexible disk, a magneto-optical disk or the like. Furthermore, the recording medium 511 may include a semiconductor memory for electrically recording information such as a ROM, a flash memory, or the like. Thus, the computer 500 can read out and/or write into the recording medium 511 via the external I/F 508.

The various programs installed in the HDD 504 are installed by, for example, setting the distributed recording medium 511 in the driver 510 connected to the external I/F 508 and reading out the various programs recorded in the recording medium 511 by the driver 510. Alternatively, the various programs installed in the HDD 504 may be downloaded from the communication network N or another network different from the communication network N via the communication I/F 507.

### <Functional configuration>

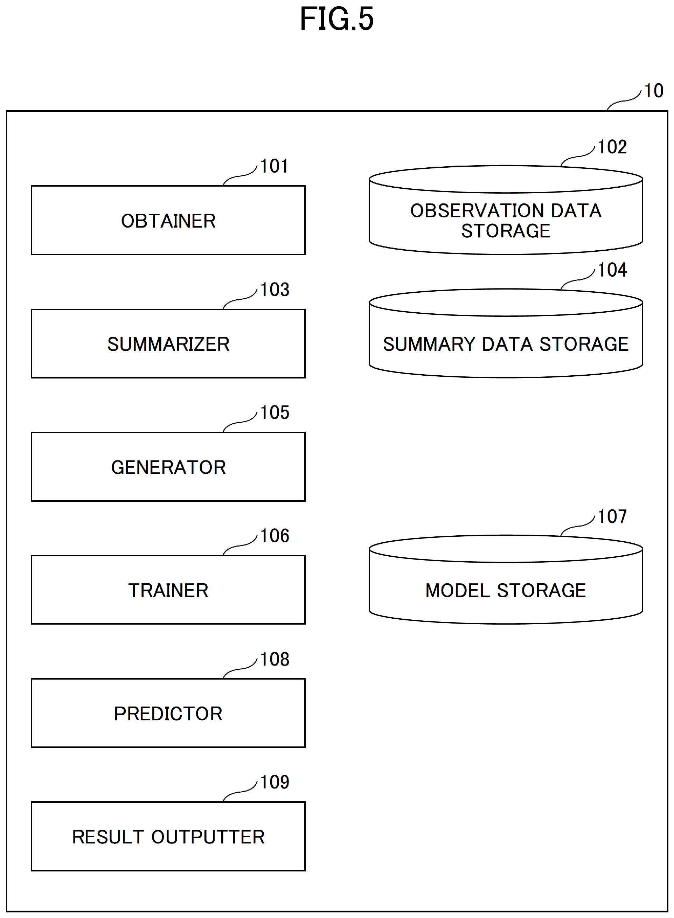

The functional configuration of the prediction system in the present embodiment will be described with reference to FIG. 5. FIG. 5 is a block diagram showing an example of the functional configuration of the information processing device.

As shown in FIG. 5, the information processing device 10 includes an obtainer 101, an observation data storage 102, a summarizer 103, a summary data storage 104, a generator 105, a trainer 106, a model storage 107, a predictor 108, and a result outputter 109.

The obtainer 101, the summarizer 103, the generator 105, the trainer 106, the predictor 108, and the result outputter 109 are achieved by processing executed by the CPU 501 by a program developed on the RAM 503 from the HDD 504 shown in FIG. 4.

The observation data storage 102, the summary data storage 104, and the model storage 107 are achieved by the HDD 504 shown in FIG. 4.

The obtainer 101 obtains observation data including an explanatory variable and a target variable at a predetermined time interval. The time interval for obtaining the observation data may vary depending on the prediction target. For example, when obtaining the water level of a dam and the amount of power generated by a hydroelectric power plant that uses the dam, observation data may be obtained at a 24-hour interval. The observation data may include a plurality of data obtained from observation performed at different times. Hereinafter, each piece of data included in the observation data is also referred to as a "record".

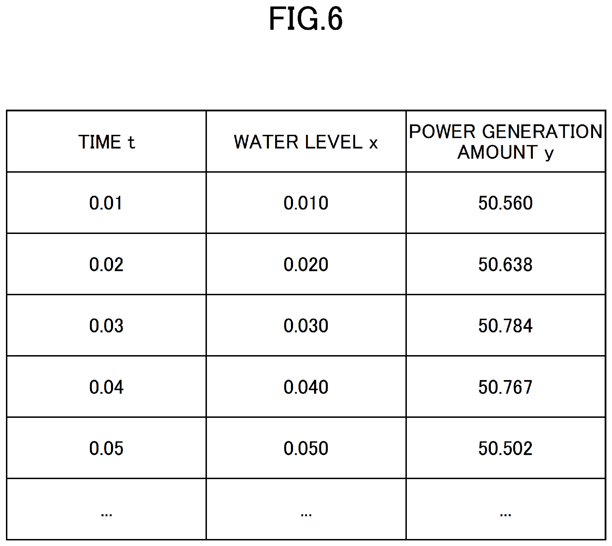

FIG. 6 is a table showing an example of the observation data. As shown in FIG. 6, the observation data includes a time t, a water level x, and a power generation amount y as data items. A set of data included in one line at time t is a record.

The time t is information indicating the time at which observation data is obtained. The time t may be an elapsed time from a predetermined reference time. The time t may be a date and time in a predetermined time zone. The water level x indicates a water level of a predetermined dam. The water level x is an example of the explanatory variable. The power generation amount y indicates the power generation amount of a hydraulic power plant using the predetermined dam. The power generation amount y is an example of the target variable. A plurality of explanatory variables or target variables may be included.

Observation data obtained by the obtainer 101 is accumulated in the observation data storage 102. The observation data storage 102 may store observation data in time series. The observation data storage 102 may store only the observation data obtained during the targeted learning period, or the observation data obtained during the targeted learning period and the observation data obtained during the time period immediately before the targeted learning period, or may store all pieces of the observation data that fall within the storage capacity of the HDD 504 or the like.

The summarizer 103 generates the summary data based on the observation data obtained from the observation data storage 102. More specifically, the summarizer 103 generates the summary data based on the observation data obtained during the targeted learning period or the observation data obtained during the time section immediately before the targeted learning period. When the summary data have already been generated, the existing summary data stored in the summary data storage 104 are read and updated. The summary data is data indicating one or more pieces of observation data on a basis of each piece of summary information. Each piece of summary information is obtained by summarizing a piece of observation data. Specifically, the summary data is data including one or more pieces of associated data, each piece of associated data being obtained by associating summary information obtained by summarizing a piece of observation data and the piece of observation data together.

The observation data included in one piece of summary information included in the summary data may be one piece of observation data obtained most recently (in other words, the time t is the latest). The observation data included in one piece of summary information included in the summary data may be less than a predetermined number of pieces of observation data selected from the newest one (in other words, from the beginning when arranged in a descending order of the time t).

The summary information may be a summary of part or all of the explanatory variables or a summary of the explanatory variables and the target variable. As an example, the summary may be obtained by performing rounding processing. Specifically, the summary may be obtained by executing rounding processing in which a predetermined number of digits (e.g., two decimal places) or less are rounded down, rounded up, or rounded off.

As an example, the summary data may be achieved by an associative array in computer programming. When the summary data is achieved by an associative array, the summary information may be a key and the observation data may be a value.

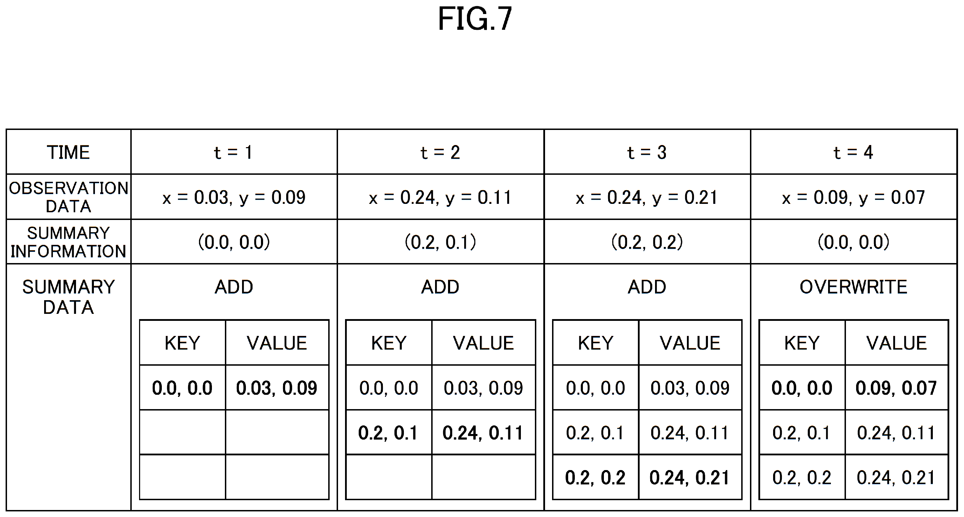

FIG. 7 is a table showing an example of how the summary data is updated. FIG. 7 shows how the summary data is updated based on the observation data obtained at every time t, starting from a state where the number of pieces of the summary data is zero. In the update of the summary data in FIG. 7, a predetermined number of elements held in each piece of summary information is one.

As shown in FIG. 7, it is assumed that observation data x = 0.03 and y = 0.09 are obtained at time t = 1. When summarizing by truncating at the second decimal place, the summary information becomes (0.0, 0.0). Since there is no element whose key is (0.0, 0.0) in the summary data, an element whose key is (0.0, 0.0) and values are x = 0.03 and y = 0.09 is added.

Next, it is assumed that observation data x = 0.24 and y = 0.11 are obtained at time t = 2. When summarizing by truncating at the second decimal place, the summary information becomes (0.2, 0.1). Since there is no element whose key is (0.2, 0.1) in the summary data, an element whose key is (0.2, 0.1) and values are x = 0.24 and y = 0.11 is added.

Next, it is assumed that observation data x = 0.24 and y = 0.21 are obtained at time t = 3. When the summary is truncated at the second decimal place, the summary information becomes (0.2, 0.2). Since there is no element whose key is (0.2, 0.2) in the summary data, an element whose key is (0.2, 0.2) and values are x = 0.24 and y = 0.21 is added.

Then, it is assumed that the observation data x = 0.09 and y = 0.07 is obtained at time t = 4. When the summary is truncated at the second decimal place, the summary information becomes (0.0, 0.0). Since there is one element, which is a predetermined number of elements, whose key is (0.0, 0.0) in the summary data, the values of the element whose key is (0.0, 0.0) are overwritten to x = 0.09 and y = 0.07.

The number of summary information included in the summary data may or may not be limited. For example, when the summary data includes a predetermined upper limit number of pieces of summary information, the summarizer 103 may delete the summary information indicating the oldest observation data when adding new summary information. Thus, the number of pieces of the summary information included in the summary data can be limited to the upper limit number or less. Furthermore, for example, the summarizer 103 may periodically delete summary information indicating observation data obtained before a predetermined time. Thus, it is possible to restrict observation data older than a predetermined time from being included in the summary data.

The summary data storage 104 stores the summary data generated by the summarizer 103.

The generator 105 generates training data for training a predictive model based on the observation data read out from the observation data storage 102 and the summary data read out from the summary data storage 104. The generator 105 may generate training data by associating the observation data obtained during the targeted learning period with the observation data shown in the summary data.

The trainer 106 generates a trained predictive model based on the training data generated by the generator 105. The predictive model is a machine learning model which outputs a prediction value of a predetermined target variable with a predetermined explanatory variable as an input. The predictive model may be, for example, a regression model. The predictive model is not limited to the regression model and may be any machine learning model.

The model storage 107 stores the trained predictive model generated by the trainer 106. When the existing predictive model is stored, the model storage 107 may overwrite the existing predictive model with a new predictive model or may store a new predictive model after backing up the existing predictive model.

The predictor 108 predicts a predetermined target variable based on the predictive model read out from the model storage 107. The predictor 108 may predict the target variable in the targeted prediction period by inputting the explanatory variable observed in the targeted prediction period to the predictive model.

The result outputter 109 outputs the predicted result by the predictor 108. The predicted result includes the predicted value of the target variable in the targeted prediction period. The result outputter 109 may transmit a result screen in which the predicted result is displayed to the terminal apparatus 20. The result outputter 109 may output the predicted result to the display apparatus 506.

### <Processing procedure>

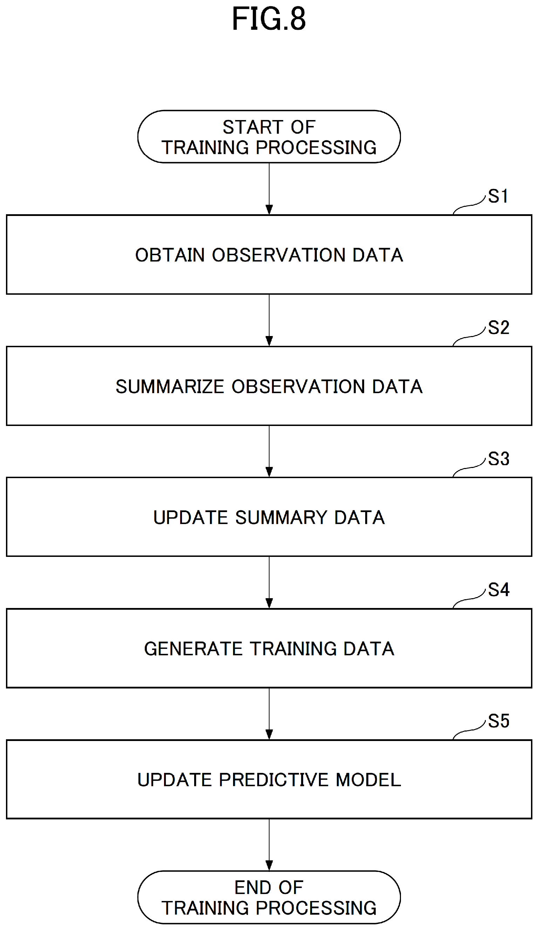

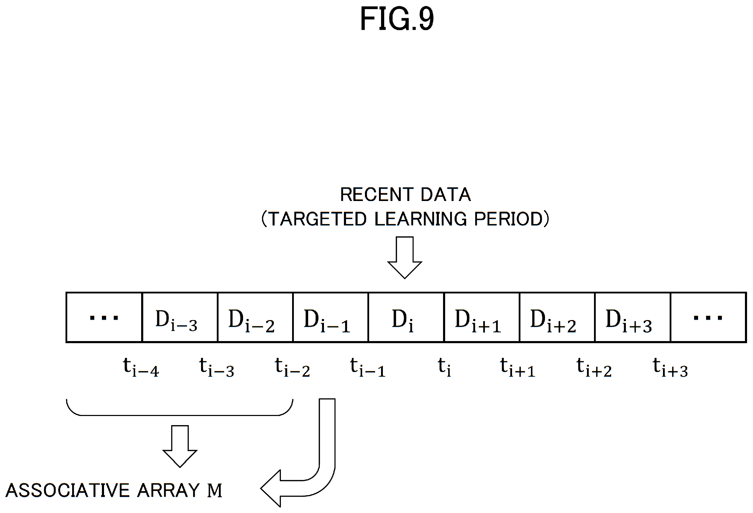

An information processing method executed by the prediction system 1000 in the present embodiment will be described with reference to FIGS. 8 and 9. The information processing method includes training processing and prediction processing. The training processing is processing for generating a trained predictive model. The prediction processing is processing for predicting a target variable by using the trained predictive model.

### <<Training processing>>

FIG. 8 is a flowchart showing an example of the training processing. The training processing is repeatedly executed at predetermined time periods.

In step S1, the obtainer 101 of the information processing device 10 obtains observation data including an explanatory variable and a target variable. Next, the obtainer 101 stores the obtained observation data in the observation data storage 102.

In step S2, the summarizer 103 of the information processing device 10 reads out the observation data obtained during the targeted learning period or observation data obtained from the observation data storage 102 during the time period immediately before the targeted learning period. Next, the summarizer 103 generates summary information based on the read observation data.

In step S3, the summarizer 103 of the information processing device 10 reads out the summary data from the summary data storage 104. Here, it is assumed that summary data including one or multiple elements is stored in the summary data storage 104. Next, the summarizer 103 updates the summary data based on the summary information generated in step S2. When the summary data does not include a predetermined number of elements having the summary information generated in step S2 as a key, the summarizer 103 adds an element having the summary information as the key and the observation data as the values to the summary data. In contrast to this, when the summary data includes a predetermined number of elements having the summary information generated in step S2 as the key, the summarizer 103 overwrites the values of the element having the summary information as a key with the observation data. When one piece of observation data obtained most recently (in other words, the time t is the latest) is used as the values of the element, the overwriting is performed by replacing the existing observation data. When the number of values of the element is not more than a predetermined number of pieces of observation data selected from the newest one (in other words, from the beginning when the data are arranged in descending order of the time t), the overwriting is performed by deleting the oldest observation data among the existing observation data and adding the new observation data. The summarizer 103 stores the updated summary data in the summary data storage 104.

In step S4, the generator 105 of the information processing device 10 reads out the observation data obtained during the targeted learning period from the observation data storage 102. The generator 105 reads out the summary data from the summary data storage 104. Next, the generator 105 obtains the observation data shown in the summary data. Subsequently, the generator 105 generates training data including the observation data obtained during the targeted learning period and the observation data shown in the summary data. Then, the generator 105 sends the generated training data to the trainer 106.

In step S5, the trainer 106 of the information processing device 10 receives the training data from the generator 105. Next, the trainer 106 generates a trained predictive model based on the received training data. Then, the trainer 106 stores the generated predictive model in the model storage 107.

FIG. 9 is a diagram illustrating an example of the training processing. Here, it is assumed that the predictive model is updated at time tᵢ. In this case, the targeted learning period is a time period from time tᵢ₋₁ to time tᵢ. Time tᵢ₋₁ is a time that extends back a predetermined length of time from time tᵢ. In this example, an associative array M, which is an example of the summary data, is updated on the basis of observation data Dᵢ₋₂, Dᵢ₋₃, and so on that have been obtained up to time tᵢ₋₂.

At time tᵢ, the obtainer 101 obtains the most recent observation data Dᵢ. Next, the obtainer 101 stores the obtained most recent observation data Dᵢ in the observation data storage 102.

The summarizer 103 obtains the associative array M from the summary data storage 104. Next, the summarizer 103 obtains observation data Dᵢ₋₁ from the observation data storage 102 and updates the associative array M based on the obtained observation data Dᵢ₋₁. Specifically, the summarizer 103 repeatedly executes the following processing for each record dⱼ included in the observation data Dᵢ₋₁. Here, "j" is an index of a record and is an integer of 1 or greater.

First, the summarizer 103 obtains summary information hⱼ by summarizing the record dⱼ. Next, the summarizer 103 adds or overwrites an element whose key is the summary information hⱼ and whose value is the record dⱼ to the associative array M. When the predetermined number of elements to be held is the one most recently obtained (in other words, the time t is the latest), the overwriting is performed by replacing the existing record with the record dⱼ. When the predetermined number of elements to be held is plural, the overwriting is performed by adding the record dⱼ from which the oldest record among the existing records is deleted, starting from the newest one (in other words, starting from the beginning when the records are arranged in descending order of the time t).

The generator 105 collects the records indicated by the respective elements of the associative array M and generates data D_{M}. The generator 105 associates the most recent observation data Dᵢ and the data D_{M}. Thus, training data D is generated.

The trainer 106 applies a predictive model by using the training data D. As a result, a predictive model is generated by learning training data generated from the most recent observation data Dᵢ and observation data from which data obtained earlier than the most recent observation data is selected. The trainer 106 updates the existing predictive model with the generated predictive model.

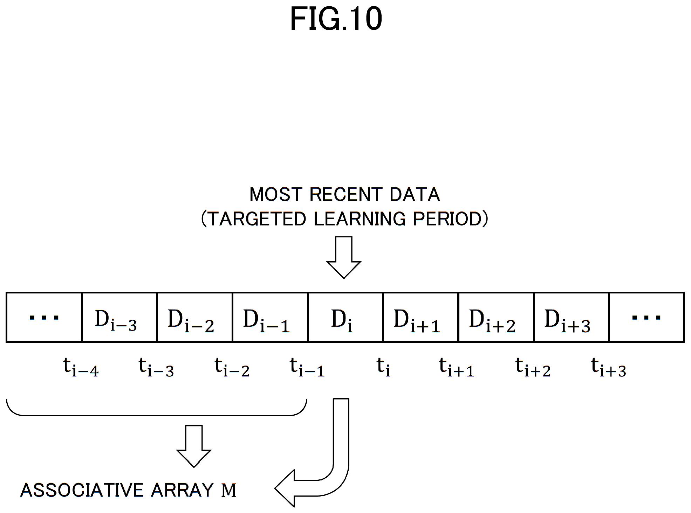

FIG. 10 is a diagram illustrating another example of the training processing. In this example, the associative array M, which is an example of the summary data, is updated based on the observation data Dᵢ₋₁, Dᵢ₋₂, and so on obtained by time tᵢ₋₁.

At time tᵢ, the obtainer 101 obtains the latest observation data Dᵢ. Next, the obtainer 101 stores the obtained most recent observation data Dᵢ in the observation data storage 102.

The summarizer 103 obtains the associative array M from the summary data storage 104. Next, the summarizer 103 obtains the most recent observation data Dᵢ from the observation data storage 102 and updates the associative array M based on the obtained observation data Dᵢ. Specifically, the summarizer 103 repeatedly executes the following processing for each record dⱼ included in the observation data Dᵢ.

First, the summarizer 103 obtains summary information hⱼ by summarizing the record dⱼ. Next, the summarizer 103 adds or overwrites an element whose key is the summary information hⱼ and whose values are the record dⱼ to the associative array M. When the predetermined number of elements to be held is the one most recently obtained (in other words, the time t is the latest), the overwriting is performed by replacing the existing record with the record dⱼ. When the predetermined number of elements to be held is plural, the overwriting is performed by adding the record dⱼ from which the oldest record among the existing records is deleted, starting from the newest one (in other words, starting from the beginning when the records are arranged in descending order of the time t).

The generator 105 collects records shown in each element of the associative array M and generates data D_{M}. The trainer 106 applies a predictive model by using the data D_{M} as training data. Thus, a predictive model trained with observation data obtained by selecting the most recent observation data Dᵢ is generated. The trainer 106 updates the existing predictive model with the generated predictive model.

### <<Prediction processing>>

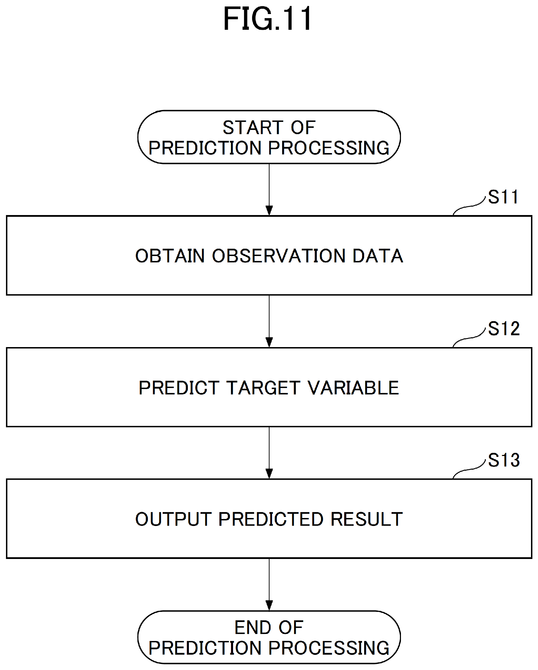

FIG. 11 is a flowchart illustrating an example of prediction processing. The prediction processing may be repeatedly executed at a predetermined time interval, or may be executed at an arbitrary timing in response to a user's request.

In step S11, the obtainer 101 of the information processing device 10 obtains an explanatory variable of the targeted prediction period. Next, the obtainer 101 sends the obtained explanatory variable to the predictor 108.

In step S12, the predictor 108 of the information processing device 10 receives the explanatory variable from the obtainer 101. Next, the predictor 108 reads out the trained predictive model from the model storage 107. Subsequently, the predictor 108 inputs the received explanatory variable to the read predictive model.

The predictive model predicts the target variable based on the input explanatory variable and outputs the predicted value. The predictor 108 obtains the predicted value of the target variable output from the predictive model. Then, the predictor 108 sends the obtained predicted value of the target variable to the result outputter 109.

In step S13, the result outputter 109 of the information processing device 10 receives the predicted value of the target variable from the predictor 108. Next, the result outputter 109 transmits the predicted result to the terminal apparatus 20. The predicted result includes the predicted value of the target variable. The predicted result may include other information related to the output of the predictive model. The other information may include, for example, statistical information of the predicted value or reliability of the predicted value.

The terminal apparatus 20 receives the predicted result from the information processing device 10. The terminal apparatus 20 then presents the received predicted result to the user. The terminal apparatus 20 may display a result screen in which the predicted result is displayed on the display apparatus 506.

### <Prediction accuracy>

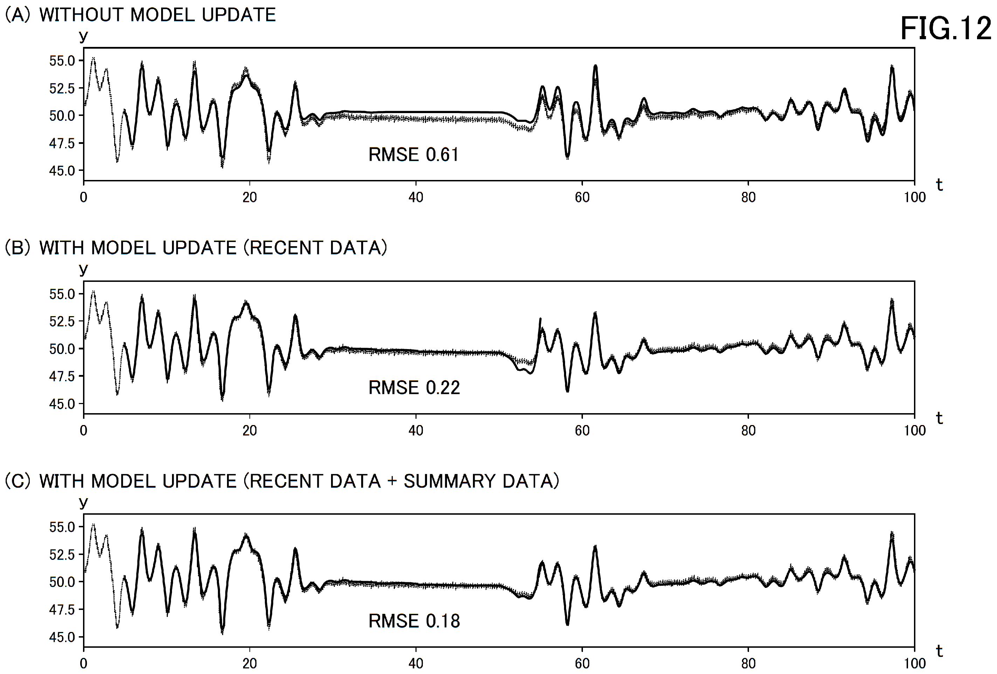

FIG. 12 illustrates graphs showing examples of prediction accuracy. A graph (A) of FIG. 12 is a graph showing a relationship between target variables and predicted values when model updating is not performed. A graph (B) of FIG. 12 is a graph showing a relationship between the target variables and the predicted values when the model updating is performed by using only the most recent data. A graph (C) of FIG. 12 is a graph showing a relationship between the target variables and the predicted values when the model updating is performed by using the most recent data and summary data. The graph (C) of FIG. 12 corresponds to the predicted result by the prediction system 1000 in the present embodiment.

FIG. 12 shows a root mean squared error (RMSE) as an example of prediction accuracy. As for the root mean squared error, a smaller value indicates a higher prediction accuracy, and a greater value indicates a lower prediction accuracy. The root mean squared error indicates that the smaller the value, the higher the prediction accuracy, and the greater the value, the lower the prediction accuracy.

As shown in FIG. 12, when the model update is not performed, the root mean squared error is 0.61. When the model update is performed by using only the most recent data, the root mean squared error is improved to 0.22. As shown in FIG. 2, when the model trained by using the observation data in the stable period is used to perform prediction that uses the observation data in the fluctuating period, the prediction error is confirmed. In contrast, when the model update is performed by using the most recent data and summary data, the prediction error is not confirmed and the root mean squared error is improved to 0.18. Referring to FIG. 12, it is shown that the prediction system 1000 in the present embodiment improves prediction accuracy.

### <Effect of embodiment>

The information processing device 10 in the present embodiment generates summary data indicating a predetermined number or less of pieces of observation data for each piece of summary information of the observation data, and generates a trained model based on the training data including the observation data and summary data obtained during the targeted learning period. Since the trained model is trained by using the training data with enhanced numerical variance, it is possible to suppress deterioration of prediction accuracy even in the case of observation data with time-varying numerical variance. In one aspect, according to the present embodiment, the prediction accuracy of the trained model can be improved.

The information processing device 10 may predict the target variable by inputting the explanatory variable obtained during the targeted prediction period to the trained model. According to the present embodiment, the target variable can be predicted with high accuracy.

The targeted learning period may be a time period including the current time. The targeted learning period may be a time period immediately before the targeted prediction period. According to the present embodiment, the target variable in the time period including the current time can be predicted with high accuracy based on the most recent observation data.

The information processing device 10 may generate summary data including observation data obtained before the targeted learning period. The information processing device 10 may generate summary data indicating a predetermined number or less of pieces of newly obtained observation data for each piece of summary information. According to the present embodiment, the numerical variance of the training data can be enhanced with a small number of pieces of observation data.

The information processing device 10 may generate summary information by executing rounding processing on the observation data. According to the present embodiment, the observation data can be summarized by simple calculation.

In the observation data, the numerical variance of the explanatory variable or the target variable may change with time. According to the present embodiment, the prediction accuracy of the trained model can be enhanced even in the observation data whose numerical variance changes with time.

The explanatory variable may include the water level of the dam, and the target variable may include the amount of power generated by a hydroelectric power plant that uses the dam. According to the present embodiment, the amount of power generated by the hydroelectric power plant can be accurately predicted.

The explanatory variable may include a parameter indicating the operation condition of the plant, and the target variable may include a parameter indicating the state of the plant. According to the present embodiment, the abnormality of the plant can be accurately detected.

### [Application example]

In the above embodiment, an example has been described in which the prediction system executes a task of predicting the amount of power generated by a hydraulic power plant that uses a dam. As another example, the prediction system in the embodiment can be applied to a task of monitoring a state of the plant.

In a technique of monitoring the state of the plant, there is a technique of using a regression parameter between state variables as an index value of a device state. By periodically updating a regression equation by using the most recent data, the latest regression parameters can always be used.

For example, the relationship between a raw material input level x to the plant and a plant pressure y can be modeled as y = ax + b with the raw material input level x as the explanatory variable and the pressure y as the target variable. The parameters "a" and "b" of the model vary due to external factors. The external factors include, for example, outside air temperature or dust accumulation in pipes. In monitoring the state of the plant, the regression parameters "a" and "b" are used as materials for determining when to clean the pipes.

When the state variable is in a stable state and the numerical variance of the most recent data used for regression is poor, the regression equation may become a constant equation or the regression parameters may diverge. When the prediction system in the embodiment is applied, the latest state variable is stored in summary data for each piece of summary information of the state variable, and the regression parameters can be obtained by adding the summary data to the most recent data.

The prediction system in the application example can suppress a decrease in the numerical variance of data used for regression, and can obtain regression parameters with high accuracy. In one aspect, according to the application example, abnormalities in the plant can be detected with high accuracy.

Although not described in detail here as another application example, the prediction system may be used to predict weather or natural disasters such as the occurrence of earthquakes or volcanic eruptions.

### [Note]

Each of the functions of the embodiments described above can be achieved by one or multiple processing circuits. Here, the term "processing circuit" as used herein includes a processor programmed to execute each function by software, such as a central processing unit (CPU) or a graphics processing unit (GPU) implemented by an electronic circuit, or equipment such as an application specific integrated circuit (ASIC), a digital signal processor (DSP), a field programmable gate array (FPGA), or existing circuit modules designed to execute each of the functions described above.

Although the embodiments of the present disclosure have been described in detail above, the embodiments disclosed herein are exemplary and not restrictive in all respects. The embodiments can be modified and enhanced in various ways without departing from the scope and gist of the appended claims. The matters described in the above embodiments can be constructed in other ways to the extent not inconsistent with them, and can be combined to the extent not inconsistent with them.

This application claims the priority of Japanese Patent Application No. 2023-184702 filed in the Japanese Patent Office on October 27, 2023, and is incorporated herein by reference in its entirety.

### REFERENCE SIGNS LIST

- 10:: Information processing device
- 20:: Terminal apparatus
- 101:: Obtainer
- 102:: Observation data storage
- 103:: Summarizer
- 104:: Summary data storage
- 105:: Generator
- 106:: Trainer
- 107:: Model storage
- 108:: Predictor
- 109:: Result outputter
- 1000:: Prediction system

## Claims

1. An information processing device comprising:
an obtainer configured to obtain observation data including an explanatory variable and a target variable at a predetermined time point;
a summarizer configured to generate summary data indicating a predetermined number or less of pieces of the observation data for each piece of summary information of the observation data; and
a trainer configured to generate a trained model based on training data including the observation data obtained during a targeted learning period and the summary data.

2. The information processing device according to claim 1, further comprising:
a predictor configured to predict the target variable by inputting the explanatory variable obtained during a targeted prediction period to the trained model.

3. The information processing device according to claim 2,
wherein
the targeted prediction period is a time period including a current time, and
the targeted learning period is a time period immediately before the targeted prediction period.

4. The information processing device according to claim 3, wherein
the summarizer is further configured to generate the summary data including the observation data obtained before the targeted learning period.

5. The information processing device according to claim 4, wherein
the summarizer is further configured to generate the summary data indicating a predetermined number or less of pieces of the observation data that have been newly obtained for each piece of the summary information.

6. The information processing device according to any one of claims 1 to 5, wherein
the summarizer is further configured to generate the summary information by executing rounding processing on the observation data.

7. The information processing device according to any one of claims 1 to 6, wherein
a numerical variance of the explanatory variable or the target variable included in the observation data changes with time.

8. The information processing device according to any one of claims 1 to 7, wherein
the explanatory variable includes a water level of a dam, and
the target variable includes an amount of power generated by a hydroelectric power plant that uses the dam.

9. The information processing device according to any one of claims 1 to 7, wherein
the explanatory variable includes a parameter indicating an operation condition of a plant, and
the target variable includes a parameter indicating a state of the plant.

10. An information processing method for causing a computer to execute:
obtaining observation data including an explanatory variable and a target variable at a predetermined time,
generating summary data indicating a predetermined number or less of pieces of the observation data for each piece of summary information of the observation data, and
generating a trained model based on training data including the observation data obtained during a targeted learning period and the summary data.

11. A program for causing a computer to execute:
obtaining observation data including an explanatory variable and a target variable at a predetermined time point,
generating summary data indicating a predetermined number or less of pieces of the observation data for each piece of summary information of the observation data, and
generating a trained model based on training data including the observation data obtained during a targeted learning period and the summary data.
